# EUROPÄISCHE PATENTSCHRIFT

(11) **EP 1 085 195 B1**
(45) Veröffentlichungstag und Bekanntmachung des Hinweises auf die Patenterteilung: **29.06.2005**
(21) Anmeldenummer: 00117788.0
(22) Anmeldetag: 18.08.2000
(51) Int. Cl.: F02F 3/12, F02F 3/26, F02F 3/00

(54) **Kolbenkopf**
Piston head
Tête de piston

(30) Priorität: 14.09.1999 DE 19943945
(43) Veröffentlichungstag der Anmeldung: 21.03.2001
(73) Patentinhaber: Federal-Mogul Wiesbaden GmbH & Co.KG, 65201 Wiesbaden (DE)
(72) Erfinder: Damour, Philippe, 60489 Frankfurt (DE); Ribeiro, Carmo, Ann Arbor, MI 48103 (US)

(56) Entgegenhaltungen:
- DE-A- 4 326 978
- US-A- 4 969 433
- US-A- 5 144 923

## Beschreibung

Die Erfindung betrifft einen Kolbenkopf eines Kolbens für einen Verbrennungsmotor, insbesondere für Dieselmotoren, umfassend ein Oberteil mit einem sich im wesentlichen quer zu einer Kolbenlängsachse erstreckenden Kolbenboden, und ein mit dem Oberteil verbundenes Unterteil mit zwei Bolzennaben, deren einander zugewandte Seiten im gegenseitigen Abstand voneinander angeordnet sind, wobei die Bolzennaben jeweils ein quer zur Kolbenlängsachse verlaufendes, zum jeweils anderen fluchtendes Lagerauge umfassen und wobei im Verbindungsbereich von Oberteil und Unterteil ein dem Kolbenboden bolzennabenseitig benachbarter, sich in den Bereich zwischen den Bolzennaben öffnender Hohlraum ausgebildet ist.

Der Kolbenschaft kann als getrenntes Bauteil über einen Kolbenbolzen gelenkig mit diesem Kolbenkopf verbunden sein (zweiteiliger Kolben oder Pendelschaftkolben). Der Kolbenschaft kann auch als Einheitt starr mit dem Kolbenkopf verbunden sein.

Ein derartiger Kolben wird unter anderem als Leichtbau-Kolben in Hochleistungsmotoren, beispielsweise in LKW-Motoren, eingesetzt, bei welchen im Betrieb von in einem Brennraum eines Zylinders bei einer Verbrennung erzeugten Verbrennungsgasen auf den Kolbenboden Drücke im Bereich von etwa 180 - 220 bar ausgeübt werden. Um den dabei auftretenden Belastungen standzuhalten, müssen die Kolben entsprechend stabil ausgestaltet sein. Andererseits ist es zur Reduzierung der wirkenden Beschleunigungskräfte erwünscht, die Masse und damit die Massenträgheit der Kolben soweit wie möglich zu reduzieren. Um diesen gegensätzlichen Anforderungen gerecht zu werden, wurde bereits vorgeschlagen, Kolben herzustellen, welche in ihren mechanisch weniger beanspruchten Bereichen mit Materialausnehmungen versehen sind, um dadurch eine Gewichtsreduzierung zu bewirken. Dies wurde in der Vergangenheit insbesondere dadurch erreicht, daß im Bereich unterhalb des Kolbenbodens, d.h. bei in den Zylinder eingebautem Kolben auf der dem Brennraum abgewandten Seite des Kolbenbodens, ein Hohlraum geschaffen wurde. Dieser Bereich unterhalb des Kolbenbodens ist jedoch aufgrund der Lage der Bolzennaben, insbesondere aufgrund des geringen gegenseitigen Abstands der Bolzennaben, bei der Freilegung des Hohlraums während der Kolbenfertigung nur schwer zugänglich, was eine große Dimensionierung des Hohlraums erschwert oder ganz unmöglich macht.

Diese Problematik zeigt sich beispielsweise bei Betrachtung von Fig. 1 der WO 96/22459: Aufgrund des engen Zwischenraums zwischen den Bolzennaben ist der Bereich unterhalb des Kolbenbodens für Werkzeuge zur Freilegung des Hohlraums nur schwer zugänglich.

Um dem Problem der schlechten Zugänglichkeit des Bereichs unterhalb des Kolbenbodens bei der Herstellung eines Hohlraums zu begegnen, wird daher in der gattungsbildenden US-PS 5,150,517 vorgeschlagen, den Kolbenkopf zweiteilig aufzubauen. Gemäß diesem Stand der Technik werden Oberteil und Unterteil des Kolbenkopfes aus zwei gesonderten Bauteilen vorgefertigt und dann durch Reibschweißen zu einem Kolbenkopfrohling zusammengesetzt. Zur Ausbildung des Hohlraums werden bei der Einzelbearbeitung in beide Bauteile korrespondierende Materialausnehmungen eingebracht und die Bauteile werden dann durch Verschweißung derart zusammengesetzt, daß die beiden Materialausnehmungen zusammen den unter dem Kolbenboden liegenden Hohlraum bilden. Abschließend wird der zusammengesetzte Kolbenrohling nachbearbeitet. Auf diese Art und Weise läßt sich zwar ein Kolben mit relativ groß dimensioniertem Hohlraum und geringem Gewicht erzielen, jedoch ist eine derartige Kolbenfertigung, insbesondere das Zusammensetzen der beiden Bauteile aufwendig, was die Herstellung derartiger Kolben zeit- und kostenintensiv macht.

Weitere gebaute Kolben sind aus der EP 0 697 513 A1 und aus der DE 38 30 033 C2 bekannt. Auch bei den aus diesen Druckschriften bekannten Kolben wird der Hohlraum durch Zusammensetzen zweier mit korrespondierenden Materialausnehmungen versehener Kolbenbauteile ausgebildet. Die Kolbenbauteile werden dabei über mehrere mechanische Verbindungsteile, wie z.B. Klammern und Schrauben, zusammengefügt, was einerseits die Anfälligkeit für ein Versagen des Kolbens erhöht und andererseits wiederum kosten- und zeitintensiv ist.

Alternativ zu einem mehrteiligen Kolbenaufbau wurde hinsichtlich einer erleichterten Freilegung eines großdimensionierten Hohlraums unterhalb des Kolbenbodens im Stand der Technik ferner in Betracht gezogen, den gegenseitigen Abstand der Bolzennaben zu vergrößern. Durch diese Maßnahme können größere Werkzeuge in den Zwischenraum zwischen den Bolzennaben zur Bearbeitung des unter dem Kolbenboden liegenden Bereichs eingeführt werden. Ein größerer gegenseitiger Bolzennabenabstand hat allerdings den Nachteil, daß ein zur Lagerung einer Pleuelstange in die Lageraugen eingesetzter Bolzen entsprechend länger ausgebildet werden muß und damit einer größeren Biegebelastung ausgesetzt ist, was sich negativ auf dessen Lebensdauer auswirkt und bei Versagen des Bolzens zu Motorschäden führen kann.

Es ist demgegenüber Aufgabe der vorliegenden Erfindung, einen Kolbenkopf der eingangs bezeichneten Art bereitzustellen, welcher bei einfacher Herstellung und langer Lebensdauer eine große Dimensionierung des unterhalb des Kolbenbodens liegenden Hohlraums ermöglicht.

Diese Aufgabe wird durch einen Kolbenkopf der eingangs genannten Art gelöst, bei welchem in wenigstens einer, vorzugsweise in beiden, der einander zugewandten Seiten der Bolzennaben jeweils eine in Richtung der Kolbenlängsachse verlaufende, in den Hohlraum mündende Ausnehmung ausgebildet ist. Durch das Vorsehen von wenigstens einer, vorzugsweise zwei, Ausnehmungen im Bereich der einander zugewandten Seiten der Bolzennaben ist es möglich, trotz eines geringen lichten Abstands zwischen den Bolzennaben zusätzlich Raum für das Einführen eines Werkzeugs in den Bereich unterhalb des Kolbenbodens zur Herstellung eines relativ großvolumigen Hohlraums unterhalb des Kolbenbodens zu schaffen. Es ist also möglich, die Freilegung des Hohlraums zu vereinfachen und dennoch den lichten Abstand zwischen den beiden einander zugewandten Seiten der Bolzennaben klein zu wählen. Dadurch kann die auf einen in die Lageraugen eingesetzten Bolzen wirkende Biegebelastung klein gehalten werden. Ferner bringt die Wahl eines geringen gegenseitigen Abstands der Bolzennaben den weiteren Vorteil mit sich, daß der zur Lagerung der Pleuelstange vorgesehene Bolzen nur eine geringe Gesamtlänge aufweisen muß, was wiederum zu einer Reduzierung der bewegten Masse und damit des Massenträgheitsmoments führt.

Um den Hohlraum unterhalb des Kolbenbodens möglichst großvolumig auszubilden, kann vorgesehen sein, daß der Hohlraum die einander zugewandten Seiten der Bolzennaben zumindest abschnittsweise in Richtung quer zur Kolbenlängsachse hinterschneidet. Dabei kann vorgesehen sein, daß der Hohlraum die Mündung der in der jeweiligen Bolzennabe vorgesehenen Ausnehmung zumindest abschnittsweise in Richtung quer zur Kolbenlängsachse hinterschneidet.

Die jeweilige Ausnehmung bzw. die jeweiligen Ausnehmungen in den Bolzennaben kann bzw. können durch einen Teil einer zylindrischen, vorzugsweise kreiszylindrischen, Mantelfläche definiert sein, wobei die Zylinderlängsachse parallel zur Kolbenlängsachse verläuft, vorzugsweise mit dieser zusammenfällt. Die Herstellung der jeweiligen Ausnehmung in den Bolzennaben in Form eines Teils einer kreiszylindrischen Mantelfläche ist fertigungstechnisch unproblematisch, beispielsweise beim Schmieden des Kolbenkopfes oder mittels eines Bohrers oder zylindrischen Fräsers.

Hinsichtlich der Ausrichtung der Bolzennaben zueinander kann vorgesehen sein, daß der gegenseitige Abstand zwischen den einander zugewandten Seiten der Bolzennaben in Richtung vom Kolbenboden weg zunimmt, vorzugsweise kontinuierlich zunimmt. Bei einer derartigen Aufweitung des Zwischenraums zwischen den Bolzen in Richtung vom Kolbenboden weg kann es zur Vergrößerung des Zugangs zum kolbenbodennahen Bereich ausreichen, die Ausnehmung bzw. die Ausnehmungen lediglich im engsten Bereich, d.h. im oberteilnahen Bereich der Bolzennaben vorzusehen. Dies ist unabhängig davon, ob der gegenseitige Abstand zwischen den einander zugewandten Seiten der Bolzennaben in Richtung vom Kolbenboden weg linear oder nicht linear, d.h. im wesentlichen stufig, zunimmt. Im ersten Fall spricht man von einer Trapezbolzennabe. Bei einer nicht linearen Zunahme des gegenseitigen Abstands zwischen den Bolzennaben spricht man hingegen von Stufenbolzennaben. Es sei angemerkt, daß sich die jeweilige Ausnehmung bei in Richtung vom Kolbenboden weg im wesentlichen konstantem gegenseitigem Bolzennabenabstand über die gesamte Bolzennabenhöhe erstreckt.

Um bei in einen Motor eingebautem Kolben eine spielarme und zuverlässige Lagerung der Pleuelstange, d.h. des Pleuelkopfs, zwischen den Bolzennaben zu gewährleisten, kann vorgesehen sein, daß die einander zugewandten Seiten der Bolzennaben einander gegenüberliegende, orthogonal zur Lageraugenachse angeordnete Lagerflächen aufweisen (oben geführte Pleuelstange). Diese Lagerflächen kommen bei eingebautem Kolben mit korrespondierenden Lagerflächen des Pleuelkopfes der Pleuelstange in gegenseitige Anlage und stabilisieren die Schwenkbewegung der Pleuelstange gegen ein unerwünschtes Verkippen aus der Schwenkebene heraus. Bei sich aufweitendem Zwischenraum zwischen den Bolzennaben in Richtung vom Kolbenboden weg sind derartige Lagerflächen lediglich im oberteilnahen Bereich der Bolzennaben vorgesehen.

Hinsichtlich der Anordnung der jeweiligen Ausnehmung bezüglich der Lagerflächen an den Bolzennaben kann vorgesehen sein, daß die Lagerfläche jeweils von einem in einer gemeinsamen Ebene liegenden Lagerflächenpaar gebildet ist, zwischen welchem die jeweilige Ausnehmung vorgesehen ist. Durch eine derartige Positionierung der jeweiligen Ausnehmung zwischen den Lagerflächen des Lagerflächenpaars bleibt trotz der Verkleinerung der gesamten Lagerfläche je Bolzennabe Verkleinerung deshalb, weil der Lagerflächenabschnitt im Bereich der Ausnehmung im Vergleich zu einer Bolzennabe ohne die erfindungsgemäße Ausnehmung wegfällt - eine stabile Lagerung des Pleuelkopfes zwischen den Bolzennaben gewährleistet. In diesem Zusammenhang ist nämlich auch zu beachten, daß aufgrund der Möglichkeit eines geringen Abstands zwischen den Bolzennaben die auf den den Pleuelkopf lagernden Bolzen wirkenden Biegekräfte klein gehalten werden können, so daß sich der Bolzen im Betriebszustand nur minimal durchbiegt und damit ein unerwünschtes Verkippen der Pleuelstange aus ihrer Schwenkebene heraus minimiert wird.

Um den eingangs beschriebenen Betriebsbedingungen, d.h. den relativ hohen Betriebsdrücken, Rechnung zu tragen, kann vorgesehen sein, daß der Kolbenkopf aus einem hochfesten Werkstoff, vorzugsweise aus Stahl, hergestellt ist. Es ist jedoch auch grundsätzlich möglich, bei Einsatz des erfindungsgemäßen Kolbenkopfes unter niedrigeren Betriebsdrücken, beispielsweise im Bereich von 150 bar, den Kolbenkopf aus Aluminiumwerkstoff oder Aluminiumlegierungen herzustellen.

Die Erfindung betrifft ferner ein Verfahren zur Herstellung eines Kolbenkopfes, insbesondere eines Kolbenkopfes der vorstehend beschriebenen Art, umfassend die Schritte
(A) Herstellen eines Kolbenkopfrohlings, umfassend ein Oberteil mit einem sich im wesentlichen quer zu einer Kolbenlängsachse erstreckenden Kolbenboden und ferner umfassend ein mit dem Oberteil verbundenes Unterteil mit zwei in gegenseitigem Abstand voneinander angeordneten Bolzennaben;
(B) Ausbilden jeweils einer Ausnehmung in wenigstens einem der einander zugewandten Seiten der Bolzennaben jeweils in Richtung der Kolbenlängsachse; und
(C) Ausbilden eines Hohlraums im Verbindungsbereich von Oberteil und Unterteil mit Hilfe eines Werkzeugs, welches im Bereich der wenigstens einen Ausnehmung zwischen den Bolzennaben hindurchgeführt wird.

Dabei kann erfindungsgemäß vorgesehen sein, daß die Schritte (A) und (B) Schmiedevorgänge umfassen, was zu verschleißbeständigen Kolben führt. Ferner kann vorgesehen sein, daß Schritt (C) eine spanabhebende Bearbeitung umfaßt, was eine einfache und kostengünstige Herstellung eines Hohlraums unterhalb des Kolbenbodens ermöglicht.

Im folgenden werden Ausführungsbeispiele der Erfindung anhand der beiliegenden Zeichnungen beschrieben. Es stellen dar:
- Fig. 1: eine perspektivische Ansicht eines erfindungsgemäßen Kolbenkopfes in achsenthaltendem parallel zu den Bolzennaben verlaufendem Schnitt entlang Ebene I-I aus Fig. 2;
- Fig. 2: einen achsenthaltenden Schnitt des Kolbenkopfes aus Fig. 1 gemäß der Schnittlinie II-II;
- Fig. 3: eine Unteransicht eines erfindungsgemäßen Kolbenkopfes mit Trapezbolzennaben;
- Fig. 4: eine Unteransicht eines erfindungsgemäßen Kolbenkopfes entsprechend Fig. 3, jedoch mit Stufenbolzennaben; und
- Fig. 5: eine Schnittansicht entsprechend Fig. 2 mit schematisch dargestelltem, in den Hohlraum eingeführtem Werkzeug.

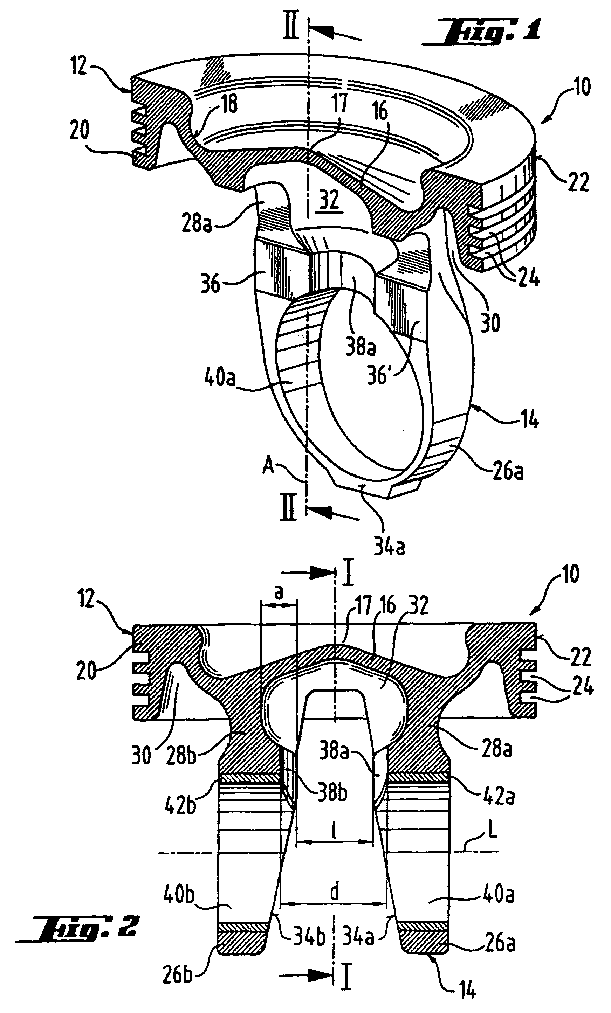

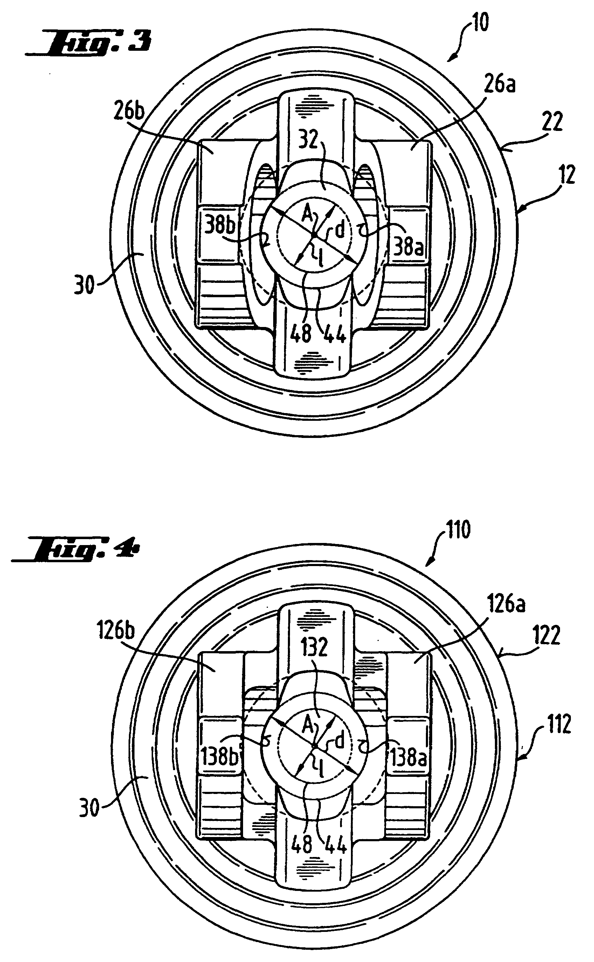

In Fig. 1 ist ein allgemein mit 10 bezeichneter erfindungsgemäßer Kolbenkopf mit einer Kolbenlängsachse A in achsenthaltendem Schnitt (entlang der Schnittebene I-I gemäß Fig. 2) dargestellt. Der Kolbenkopf 10 umfaßt ein Oberteil 12 sowie ein Unterteil 14. Das Oberteil 12 weist einen Kolbenboden 16 auf, der im wesentlichen kegelförmig ausgebildet ist, wobei die Kegelspitze 17 vom Unterteil 14 wegweist und auf der Kolbenlängsachse A liegt. In seinem radial äußeren Bereich 18 geht der Kolbenboden 16 topfartig in einen Kolbenrand 20 über. Die radial außen liegende Fläche 22 des Kolbenrands 20 dient im eingebauten Zustand des Kolbenkopfes 10, um die Kolbenringe aufzunehmen. In die Fläche 22 sind in Umfangsrichtung um die Kolbenlängsachse A Ringnuten 24 eingearbeitet, welche zur Aufnahme von nicht dargestellten Kolbenringen dienen.

Das Unterteil 14 umfaßt, wie auch in Fig. 2 gezeigt, zwei Bolzennaben 26a, 26b. Die Bolzennaben 26a, 26b sind jeweils über einen Verbindungsbereich 28a, 28b mit dem Oberteil 12 verbunden. Zwischen dem Verbindungsbereich 28a, 28b und dem radial inneren Bereich des Kolbenrand 20 ist eine Ringausnehmung 30 aus Gründen der Gewichtseinsparung vorgesehen, um Öl zur Kühlung vorzusehen, um die Wärme von den Kolbenringen abzuleiten.

Unterhalb des Kolbenbodens 16, d.h. auf der Höhe des Verbindungsbereichs 28a, 28b der Bolzennaben 26a, 26b mit dem Oberteil 12 ist ein Hohlraum 32 vorgesehen. Der Hohlraum wird kuppelartig durch die Unterseite des Kolbenbodens 16 sowie die Verbindungsbereiche 28a, 28b eingegrenzt. Wie in Fig. 2 gezeigt, bildet der Hohlraum 32 gegenüber den einander zugewandten, den lichten Abstand 1 zwischen den beiden Bolzennaben 26a und 26b definierenden Seiten 34a und 34b eine Hinterschneidung, jeweils um das Maß a.

Im kolbenbodennahen Bereich der Bolzennaben 26a, 26b ist jeweils ein Lagerflächenpaar bestehend aus Lagerflächen 36 und 36' vorgesehen, welche in einer gemeinsamen Ebene liegen und parallel zur Kolbenlängsachse A sowie parallel zu den korrespondierenden gegenüberliegenden Lagerflächen der jeweils anderen Bolzennabe ausgerichtet sind. Zwischen den Lagerflächen 36, 36' sind in in den Bolzennaben 26a, 26b einander gegenüberliegende Ausnehmungen 38a, 38b vorgesehen. Die Ausnehmungen 38a, 38b sind jeweils als Teil einer Mantelfläche eines Kreiszylinders definiert, wobei die Zylinderachse mit der Kolbenlängsachse A zusammenfällt. Die Ausnehmungen 38a, 38b in den Bolzennaben 26a, 26b erstrecken sich in Richtung der Kolbenlängsachse A jeweils derart in den Hohlraum 32 hinein, daß im Bereich der Ausnehmungen 38a und 38b der maximale Abstand d zwischen den Bolzennaben 26a, 26b die lichte Weite 1 deutlich überschreitet, so daß im Bereich der Ausnehmungen 38a, 38b der durch den Abstand zwischen den Bolzennaben 26a und 26b begrenzte Zugang zum Hohlraum 32 erweitert ist.

Wie in den Fign. 1 und 2 ferner zu erkennen ist, sind in den Bolzennaben 26a, 26b Lageraugen 40a und 40b vorgesehen, die zueinander fluchten und deren Lageraugenlängsachse L orthogonal zur Kolbenlängsachse A verläuft. Die Lageraugen 40a und 40b dienen zur Aufnahme eines nicht dargestellten Bolzens, welcher wiederum im eingebauten Zustand des Kolbenkopfes 10 das Pleuelauge einer Pleuelstange lagernd durchsetzt. In Fig. 2 sind ferner Lagerbuchsen 42a, 42b dargestellt, welche eine verschleißgünstige Lagerung des nicht dargestellten Bolzens gewährleisten.

Fig. 2 zeigt auch, daß der lichte Abstand zwischen den Bolzennaben 26a, 26b in Richtung der Kolbenlängsachse A vom Kolbenboden 16 weg zunimmt und zwar ab der unteren Bolzennabenhälfte stetig. Derartig geformte Bolzennaben 26a, 26b werden auch als Trapezbolzennaben bezeichnet. Eine derartige Aufweitung des Zwischenraums zwischen den Bolzennaben 26a und 26b ist unter dem Gesichtspunkt der Lagerung eines Pleuelkopfes zwischen den Bolzennaben möglich, da der nicht dargestellte Bolzen, welcher wie vorstehend beschrieben in den Lageraugen 40a, 40b gelagert ist, sowie die Lagerflächen 36, 36' für eine positionsgerechte Lagerung der Pleuelstange sorgen. Durch die Maßnahme der Aufweitung des Zwischenraums zwischen den Bolzennaben 26a und 26b in Richtung vom Kolbenboden 16 weg läßt sich zusätzlich Kolbengewicht einsparen.

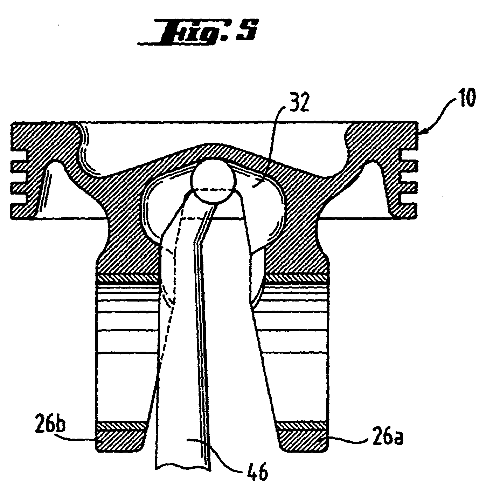

Fig. 3 zeigt den erfindungsgemäßen Kolbenkopf 10 gemäß Fig. 1 und 2 in einer Ansicht von unten. In dieser Ansicht wird die Vergrößerung des Zugangs des Hohlraums 32 durch die Ausnehmungen 38a und 38b besonders deutlich. Wie oben beschrieben, sind die Ausnehmungen 38a, 38b durch eine strichliert dargestellte kreiszylindrische Mantelfläche 44 definiert, wobei die Zylinderlängsachse mit der Kolbenlängsachse A zusammenfällt. Diese Mantelfläche begrenzt auch den Bewegungsraum eines zwischen die Bolzennaben 26a und 26b eingeführten Werkzeugs 46 in Richtung zu den Bolzennaben hin, wie in Fig. 5 schematisch dargestellt. Der in Fig. 3 punktiert dargestellte maximale Bewegungsbereich 48 um die Kolbenlängsachse A bei einem Kolbenkopf ohne die erfindungsgemäßen Ausnehmungen 38a, 38b, wie es beispielsweise bei mit Bezug auf den Stand der Technik eingangs beschriebenen herkömmlichen Kolben der Fall ist, ist - wie in Fig. 3 deutlich zu erkennen ist - erheblich kleiner (1-d) als der zur Verfügung stehende Bewegungsbereich 44 in diesem zentralen Kolbenbereich bei der erfindungsgemäßen Lösung mit den Ausnehmungen 38a und 38b. Durch die Ausnehmungen 38a und 38b kann das Werkzeug 46 also im zentralen Kolbenbereich um die Achse A weiter in Richtung zum Kolbenrand hin bewegt werden, und somit kann der Hohlraum 32 größer dimensioniert werden.

Das Vorsehen der Ausnehmungen 38a und 38b führt darüber hinaus zu einer weiteren Gewichtsreduzierung des Kolbenkopfes 10, was dessen Trägheitsmoment weiter herabsetzt.

Fig. 4 zeigt als Alternative zu Fig. 1-3 und 5 ein zweites Ausführungsbeispiel eines erfindungsgemäßen Kolbenkopfes 110. Der Kolbenkopf 110 weist im wesentlichen die gleichen Komponenten wie der vorstehend beschriebene Kolbenkopf 10 auf, so daß diese Komponenten jeweils mit dem gleichen Bezugszeichen, jedoch vermehrt um die Zahl 100 bezeichnet sind. Der Kolbenkopf 110 gemäß Fig. 4 unterscheidet sich von dem vorstehend beschriebenen Kolbenkopf 10 lediglich darin, daß dessen Bolzennaben 126a und 126b nicht kontinuierlich in Richtung von dem Oberteil 112 weg auseinanderlaufen, sondern daß deren kolbenbodenfernen Abschnitte zueinander parallel verlaufen.

## Patentansprüche

1. Kolbenkopf (10; 110) eines Kolbens für einen Verbrennungsmotor, insbesondere für Dieselmotoren, umfassend:
- ein Oberteil (12; 112) mit einem sich im wesentlichen quer zu einer Kolbenlängsachse (A) erstreckenden Kolbenboden, und
- ein mit dem Oberteil (12; 112) verbundenes Unterteil (14) mit zwei Bolzennaben (26a, b; 126a, b), deren einander zugewandte Seiten im gegenseitigen Abstand (1) voneinander angeordnet sind,
wobei die Bolzennaben (26a, b; 126a, b) jeweils ein quer zur Kolbenlängsachse (A) verlaufendes, zum jeweils anderen fluchtendes Lagerauge (40a, 40b) umfassen und wobei im Verbindungsbereich (28a, 28b) von Oberteil (12) und Unterteil (14) ein dem Kolbenboden (16) bolzennabenseitig benachbarter, sich in den Bereich zwischen den Bolzennaben (26a, 26b; 126a, 126b) öffnender Hohlraum (32; 132) ausgebildet ist,
**dadurch gekennzeichnet,**
**daß** in wenigstens einer, vorzugsweise in beiden, der einander zugewandten Seiten (34a, 34b) der Bolzennaben (26a, b; 126a, b) jeweils eine in Richtung der Kolbenlängsachse (A) verlaufende, in den Hohlraum (32; 132) mündende Ausnehmung (38a, b; 138a, b) ausgebildet ist.

2. Kolbenkopf nach Anspruch 1,
**dadurch gekennzeichnet,**
**daß** der Hohlraum (32) die einander zugewandten Seiten (34a, 34b) der Bolzennaben (26a, 26b) zumindest abschnittsweise in Richtung quer zur Kolbenlängsachse (A) hinterschneidet.

3. Kolbenkopf nach Anspruch 1 oder 2,
**dadurch gekennzeichnet,**
**daß** der Hohlraum (32) die Mündung der jeweiligen Ausnehmung (38a, 38b) in den Hohlraum zumindest abschnittsweise in Richtung quer zur Kolbenlängsachse (A) hinterschneidet.

4. Kolbenkopf nach einem der Ansprüche 1 bis 3,
**dadurch gekennzeichnet,**
**daß** die jeweilige Ausnehmung bzw. die jeweiligen Ausnehmungen (38a, 38b) in den Bolzennaben durch einen Teil einer zylindrischen, vorzugsweise kreiszylindrischen, Mantelfläche (44) definiert ist bzw. sind, wobei die Zylinderlängsachse parallel zur Kolbenlängsachse (A) verläuft, vorzugsweise mit dieser zusammenfällt.

5. Kolbenkopf nach einem der vorangehenden Ansprüche,
**dadurch gekennzeichnet,**
**daß** der gegenseitige Abstand zwischen den einander zugewandten Seiten (34a, 34b) der Bolzennaben (26a, 26b) in Richtung von dem Kolbenboden (16) weg zunimmt, vorzugsweise kontinuierlich zunimmt.

6. Kolbenkopf nach Anspruch 5,
**dadurch gekennzeichnet,**
**daß** der gegenseitige Abstand zwischen den einander zugewandten Seiten (34a, 34b) der Bolzennaben (26a, 26b) in Richtung von dem Kolbenboden (16) weg im wesentlichen linear zunimmt.

7. Kolbenkopf nach Anspruch 5,
**dadurch gekennzeichnet,**
**daß** der gegenseitige Abstand zwischen den einander zugewandten Seiten der Bolzennaben (126a, 126b) in Richtung von dem Kolbenboden weg im wesentlichen stufig zunimmt.

8. Kolbenkopf nach einem der vorangehenden Ansprüche,
**dadurch gekennzeichnet,**
**daß** die einander zugewandten Seiten (34a, 34b) der Bolzennaben (26a, 26b) einander gegenüberliegende, orthogonal zur Lageraugenachse (L) angeordnete Lagerflächen (36, 36') aufweisen.

9. Kolbenkopf nach Anspruch 8,
**dadurch gekennzeichnet,**
**daß** die Lagerflächen jeweils von einem in einer gemeinsamen Ebene liegenden Lagerflächenpaar (36, 36') gebildet sind, zwischen welchem die jeweilige Ausnehmung (38a, 38b) vorgesehen ist.

10. Kolbenkopf nach Anspruch 9,
**dadurch gekennzeichnet,**
**daß** das Lagerflächenpaar (36, 36') jeweils im kolbenkopfnahen Bereich der jeweiligen Bolzennaben (26a, 26b) vorgesehen ist.

11. Kolbenkopf nach einem der vorangehenden Ansprüche,
**dadurch gekennzeichnet,**
**daß** der Kolbenkopf (10) aus einem Stück hergestellt ist.

12. Kolbenkopf nach einem der vorangehenden Ansprüche,
**dadurch gekennzeichnet,**
**daß** der Kolbenkopf (10) aus einem hochfesten Werkstoff, vorzugsweise aus Stahl hergestellt ist.

13. Verfahren zur Herstellung eines Kolbenkopfes, insbesondere eines Kolbenkopfes nach einem der Ansprüche 1-12, umfassend die Schritte:
A) Herstellen eines Kolbenrohlings für einen Kolbenkopf, umfassend ein Oberteil (12) mit einem Kolbenboden (16) und ferner umfassend ein Unterteil (14) mit zwei in gegenseitigem Abstand voneinander getrennten Bolzennaben (26a, 26b);
B) Ausbilden einer Ausnehmung (38a, 38b) in wenigstens einer, vorzugsweise in beiden, der einander zugewandten Seiten (34a, 34b) der Bolzennaben (26a, 26b) jeweils in Richtung der Kolbenlängsachse (A); und
C) Ausbilden eines Hohlraums (32) im Verbindungsbereich (28a, 28b) von Oberteil (12) und Unterteil (14) mit Hilfe eines Werkzeugs (46), welches durch den zwischen den Bolzennaben (26a, 26b) sowie der Ausnehmung bzw. den Ausnehmungen (38a, 38b) gebildeten Zwischenraum eingeführt wird.

14. Verfahren nach Anspruch 13,
**dadurch gekennzeichnet,**
**daß** die Schritte A) und B) Schmiedevorgänge umfassen.

15. Verfahren nach Anspruch 13 oder 14,
**dadurch gekennzeichet,**
daß der Schritt C) eine spanabhebende Bearbeitung umfaßt.

## Claims

1. Piston head (10; 110) of a piston for an internal-combustion engine, especially for diesel engines, including:
- an upper portion (12; 112) having a piston crown extending substantially perpend icular to a longitudinal axis (A) of the piston, and
- a lower portion (14) connected to the upper portion (12; 112) and having two gudgeon-pin bosses (26a, b; 126a, b), the opposing sides of which are disposed spaced apart from each other by an opposing distance (I),
wherein the gudgeon-pin bosses (26a, b; 126a, b) each include a bearing eye (40a, 40b), which extends perpendicular to the longitudinal axis (A) of the piston and is aligned with the other eye and wherein, in the region (28a, 28b) connecting the upper portion (12) with the lower portion (14), a cavity (32; 132) is provided, which is adjacent the piston crown (16) on the gudgeon-pin boss side and opens into the region between the gudgeon-pin bosses (26a, 26b; 126a, 126b),
**characterized in that**
in at least one, and preferably both, of the opposing sides (34a, 34b) of the gudgeon-pin bosses (26a, b; 126a, b) there is provided a recess (38a, b; 138a, b), which extends in the direction of the longitudinal axis (A) of the piston and leads into the cavity (32; 132).

2. Piston head according to claim 1,
cha racterized in that
the cavity (32) cuts into the opposing sides (34a, 34b) of the gudgeon-pin bosses (26a, 26b) at least in sections in a direction perpendicular to the longitudinal axis (A) of the piston.

3. Piston head according to claim 1 or claim 2,
**characterized in that**
the cavity (32) cuts into the opening of the respective recess (38a, 38b) into the cavity at least in sections in a direction perpendicular to the longitudinal axis (A) of the piston

4. Piston head according to any one of claims 1 to 3,
**characterized in that**
the respective recess or recesss (38a, 38b) in the gudgeon-pin bosses is or are defined by a part of a cylindrical, preferably circular cylindrical, generated surface (44), wherein the longitudinal axis of the cylinder runs parallel to the longitudinal axis (A) of the piston and is preferably coincident therewith.

5. Piston head according to any one of the preceding claims,
**characterized in that**
the opposing distance between the opposing sides (34a, 34b) of the gudgeon-pin bosses (26a, 26b) increases in a preferably continuous manner going away from the piston crown (16).

6. Piston head according to claim 5,
**characterized in that**
the opposing distance between the opposing sides (34a, 34b) of the gudgeon-pin bosses (26a, 26b) increases in a generally linear manner going away from the piston crown (16).

7. Piston head according to claim 5,
**characterized in that**
the opposing distance between the opposing sides of the gudgeon-pin bosses (126a, 126b) increases in a generally stepwise manner going away from the piston crown (16).

8. Piston head according to any one of the preceding claims,
**characterized in that**
the opposing sides (34a, 34b) of the gudgeon-pin bosses (26a, 26b) comprise bearing surfaces (36, 36'), which lie opposite each other and are disposed perpendicular to the axis (L) of the bearing eye.

9. Piston head according to claim 8,
**characterized in that**
the bearing surfaces are each formed from a pair of bearing-surfaces (36, 36'), which lie in a common plane, between which pair the respective recess (38a, 38b) is provided.

10. Piston head according to claim 9,
**characterized in that**
the pair of bearing-surfaces (36, 36') is in each case provided in the region of the respective gudgeon-pin boss (26a, 26b) near to the piston head.

11. Piston head according to any one of the preceding claims,
**characterized in that**
the piston head (10) is made from a single piece.

12. Piston head according to any one of the preceding claims,
**characterized in that**
the piston head (10) is preferably made from a very hard material, preferably steel.

13. Method for producing a piston head, especially a piston head according to any one of claims 1-12, comprising the following steps:
A) producing a piston blank for a piston head, having an upper portion (12) with a piston crown (16) and also having a lower portion (14) with two gudgeon-pin bosses (26a, 26b) spaced apart from each other by an opposing distance;
B) forming a recess (38a, 38b) in at least one, and preferably both, of the opposing sides (34a, 34b) of the gudgeon-pin bosses (26a, 26b), each of the recesses being in the direction of the longitudinal axis (A) of the piston; and
C) forming a cavity (32) in the region (28a, 28b) connecting the upper portion (12) with the lower portion (14) using a tool (46), which is introduced through the intermediate space formed between the gudgeon-pin bosses (26a, 26b) and the recess or recesss (38a, 38b).

14. Method according to claim 13,
**characterized in that**
steps A) and B) involve forging operations.

15. Method according to claim 13 or claim 14,
**characterized in that**
step C) involves processing by machining.

## Revendications

1. Tête de piston (10 ; 110) d'un piston pour un moteur à combustion interne, en particulier pour des moteurs Diesel, comprenant :
- une partie supérieure (12 ; 112) avec un fond de piston s'étendant sensiblement transversalement à un axe longitudinal (A) de piston, et
- une partie inférieure (14) reliée à la partie supérieure (12; 112), avec deux bossages d'axe (26a, 26b ; 126a, 126b) dont les côtés en vis-à-vis sont disposés à une distance mutuelle (1),
les bossages d'axe (26a, 26b ; 126a, 126b) comprenant chacun un trou d'axe (40a, 40b) s'étendant transversalement à l'axe longitudinal (A) du piston et aligné avec l'autre trou d'axe respectif, et sachant qu'est formée, dans la région de liaison (28a, 28b) entre la partie supérieure (12) et la partie inférieure (14), une cavité (32 ; 132) voisine du fond de piston (16) du côté des bossages d'axe et s'ouvrant dans la région située entre les bossages d'axe (26a, 26b ; 126a, 126b),
**caractérisée en ce qu'**un évidement respectif (38a, 38b ; 138a, 138b), s'étendant dans la direction de l'axe longitudinal (A) du piston et débouchant dans la cavité (32 ; 132), est formé dans au moins un des côtés en vis-à-vis (34a, 34b) des bossages d'axe (26a, 26b ; 126a, 126b), de préférence dans les deux côtés.

2. Tête de piston selon la revendication 1, **caractérisée en ce que** la cavité (32) contre-dépouille les côtés en vis-à-vis (34a, 34b) des bossages d'axe (26a, 26b) au moins sectoriellement en direction transversale à l'axe longitudinal (A) du piston.

3. Tête de piston selon la revendication 1 ou 2, **caractérisée en ce que** la cavité (32) contre-dépouille le débouché de l'évidement respectif (38a, 38b) dans la cavité au moins sectoriellement en direction transversale à l'axe longitudinal (A) du piston.

4. Tête de piston selon l'une des revendications 1 à 3, **caractérisée en ce que** l'évidement ou les évidements respectifs (38a, 38b) dans les bossages d'axe est ou sont définis par une partie d'une surface circonférentielle (44) cylindrique, de préférence cylindrique circulaire, l'axe longitudinal du cylindre s'étendant parallèlement à l'axe longitudinal (A) du piston, de préférence coïncidant avec ce dernier.

5. Tête de piston selon l'une des revendications précédentes, **caractérisée en ce que** la distance mutuelle entre les côtés en vis-à-vis (34a, 34b) des bossages d'axe (26a, 26b) augmente, de préférence continûment, lorsque l'on s'éloigne du fond de piston (16).

6. Tête de piston selon la revendication 5, **caractérisée en ce que** la distance mutuelle entre les côtés en vis-à-vis (34a, 34b) des bossages d'axe (26a, 26b) augmente sensiblement linéairement lorsque l'on s'éloigne du fond de piston (16).

7. Tête de piston selon la revendication 5, **caractérisée en ce que** la distance mutuelle entre les côtés en vis-à-vis des bossages d'axe (126a, 126b) augmente sensiblement par paliers lorsque l'on s'éloigne du fond de piston.

8. Tête de piston selon l'une des revendications précédentes, **caractérisée en ce que** les côtés en vis-à-vis (34a, 34b) des bossages d'axe (26a, 26b) présentent des faces d'appui (36, 36') mutuellement opposées, disposées orthogonalement à l'axe (L) du trou d'axe.

9. Tête de piston selon la revendication 8, **caractérisée en ce que** les faces d'appui sont respectivement formées par une paire de faces d'appui (36, 36') situées dans un plan commun, entre lesquelles est prévu l'évidement respectif (38a, 38b).

10. Tête de piston selon la revendication 9, **caractérisée en ce que** la paire de faces d'appui (36, 36') est respectivement prévue dans la région du bossage d'axe respectif (26a, 26b) qui est proche de la tête de piston.

11. Tête de piston selon l'une des revendications précédentes, **caractérisée en ce que** la tête de piston (10) est fabriquée en une pièce.

12. Tête de piston selon l'une des revendications précédentes, **caractérisée en ce que** la tête de piston (10) est fabriquée en un matériau à haute résistance, de préférence en acier.

13. Procédé de fabrication d'une tête de piston, notamment d'une tête de piston selon l'une des revendications 1 à 12, comprenant les étapes suivantes :
A) fabrication d'une ébauche de piston pour une tête de piston, comprenant une partie supérieure (12) avec un fond de piston (16) et comprenant en outre une partie inférieure (14) avec deux bossages d'axe (26a, 26b) séparés à distance l'un de l'autre ;
B) formation d'un évidement (38a, 38b) dans au moins un des côtés en vis-à-vis (34a, 34b) des bossages d'axe (26a, 26b), de préférence dans les deux côtés, chaque fois dans la direction de l'axe longitudinal (A) du piston ; et
C) formation d'une cavité (32) dans la région de liaison (28a, 28b) entre la partie supérieure (12) et la partie inférieure (14), à l'aide d'un outil (46) qui est introduit par l'espace intermédiaire formé entre les bossages d'axe (26a, 26b) ainsi que l'évidement ou les évidements (38a, 38b).

14. Procédé selon la revendication 13, **caractérisé en ce que** les étapes A) et B) comprennent des opérations de forgeage.

15. Procédé selon la revendication 13 ou 14, **caractérisé en ce que** l'étape C) comprend un usinage par enlèvement de matière.
